# EUROPÄISCHE PATENTANMELDUNG

(11) **EP 1 314 936 A2**
(43) Veröffentlichungstag der Anmeldung: **28.05.2003**
(21) Anmeldenummer: 02024155.0
(22) Anmeldetag: 30.10.2002
(51) Int. Cl.: F24F 11/047

(54) **Volumenstromregler**

(30) Priorität: 22.11.2001 DE 20119013 U; 22.11.2001 DE 20119316 U; 16.05.2002 DE 20207687 U
(71) Anmelder: Gebrüder Trox, Gesellschaft mit beschränkter Haftung, D-47506 Neukirchen-Vluyn (DE)
(72) Erfinder: Baumeister, Gregor, 47802 Krefeld (DE); Ingenbold, Peter, 45897 Gelsenkirchen (DE); Sadkowski, Manfred, 47608 Geldern (DE); Sefker, Thomas, Dr., 47506 Neukirchen-Vluyn (DE)
(74) Vertreter: DR. STARK & PARTNER

(57) **Zusammenfassung**

Die Erfindung betrifft einen Volumenstromregler, insbesondere für klima- und lüftungstechnische Anlagen, mit einer in einem Strömungskanal auf einer quer zur Strömungsrichtung angeordneten Welle schwenkbar gelagerten Regelklappe, die unter Einwirkung eines anströmenden Mediums gegen eine Rückstellkraft aus der Offenstellung in die Schließstellung verschwenkbar ist und bei sich verringerndem Volumenstrom wieder in die Offenstellung zurückschwenkt, um einen Volumenstromregler anzugeben, mittels dessen bei jeden Strömungsverhältnissen der Strömungskanal verschlossen werden kann, soll eine das Schließen der Regelklappe (3) unabhängig von der aktuell wirkenden Strömung ermöglichende und das strömungsbedingte Schließen der Regelklappe (3) nicht wesentlich beeinflussende zusätzliche Schließeinrichtung (9) zum Verschwenken der Regelklappe (3) in die Schließstellung vorgesehen sein.

## Beschreibung

Die Erfindung betrifft einen Volumenstromregler, insbesondere für klima- und lüftungstechnische Anlagen, mit einer in einem Strömungskanal auf einer quer zur Strömungsrichtung angeordneten Welle schwenkbar gelagerten Regelklappe, die unter Einwirkung eines anströmenden Mediums gegen eine Rückstellkraft aus der Offenstellung in die Schließstellung verschwenkbar ist und bei sich verringerndem Volumenstrom wieder in die Offenstellung zurückschwenkt.

Aus der Praxis sind derartige Volumenstromregler in verschiedenen Ausführungen bekannt. Sie arbeiten mechanisch selbsttätig, weil das strömungsbedingte Regelklappendrehmoment durch die Rückstellkraft, die üblicherweise durch eine Feder erzeugt wird, kompensiert wird. Bei Änderung der Strömungsverhältnisse ändert sich auch die Schwenkstellung der Regelklappe, so dass so der Volumenstrom selbsttätig in dem Strömungskanal geregelt wird.

Nachteilig hierbei ist, dass mit diesen bekannten Volumenstromreglern der Strömungskanal nicht zu jedem Zeitpunkt und bei jeden Strömungsverhältnissen verschlossen werden kann, da ein Verschwenken der Regelklappe in die Schließstellung ausschließlich bei Volumenströmen in Strömungsrichtung erfolgt, bei denen das strömungsbedingte Regelklappendrehmoment größer als die auf die Regelklappe wirkende Rückstellkraft ist.

Aufgabe der Erfindung ist es, einen Volumenstromregler anzugeben, mittels dessen bei jeden Strömungsverhältnissen der Strömungskanal verschlossen werden kann.

Diese Aufgabe wird dadurch gelöst, dass eine das Schließen der Regelklappe unabhängig von der aktuell wirkenden Strömung ermöglichende und das strömungsbedingte Schließen der Regelklappe nicht wesentlich beeinflussende zusätzliche Schließeinrichtung zum Verschwenken der Regelklappe in die Schließstellung vorgesehen ist. Durch die zusätzliche Schließeinrichtung ist es möglich, die Regelklappe zu jeder Zeit und bei jeden Strömungsverhältnissen in die Schließstellung zu verschwenken und so den Strömungskanal zu verschließen. Ist der Volumenstromregler beispielsweise in einer klimatechnischen Anlage integriert, können auf diese Weise, z. B. unabhängig von den herrschenden Strömungsverhältnissen, mittels der Schließeinrichtung einzelne Bereiche der klimatechnischen Anlage verschlossen werden, sofern in diesen Bereichen eine Klimatisierung nicht erwünscht ist.

Der Volumenstromregler kann beispielsweise in einem Kanalabschnitt integriert sein, wobei bei der Montage endseitig die entsprechenden angrenzenden Kanalabschnitte der klimatechnischen Anlage angeschlossen werden. Der Volumenstromregler kann auch als Einschubbauteil ausgebildet sein, so dass er in einen bestehenden Kanalabschnitt eingeschoben werden kann. Ebenfalls kann der Volumenstromregler Teil einer dezentralen Lüftung oder einer Fassadenbelüftung sein, wo er beispielsweise im Bereich eines Luftauslasses in einer Fassade montiert ist.

Die zusätzliche Schließeinrichtung kann ein direkt auf die Regelklappe wirkendes Betätigungselement, insbesondere einen Schwenkhebel, umfassen. Bei Verschwenken des Schwenkhebels wird die Regelklappe aus ihrer Offenstellung in die Schließstellung geführt. Es ist aber auch durchaus denkbar, dass das Betätigungselement als im Wesentlichen senkrecht zur Strömungsrichtung ausgerichteter und verschieblicher Schieber ausgebildet ist. Wird der Schieber in den Strömungskanal bewegt, so wird hierdurch die Regelklappe in ihre Schließstellung verschwenkt.

Zweckmäßigerweise ist der mit der Regelklappe in Kontakt bringbare Bereich des Betätigungselementes abgerundet ausgebildet, damit das Betätigungselement bei Verschwenken der Regelklappe auf dieser besser gleiten kann.

Bei einer anderen Ausführungsform kann die zusätzliche Schließeinrichtung ein indirekt über wenigstens ein Bauteil auf die Regelklappe wirkendes Betätigungselement, insbesondere einen Schwenkhebel, umfassen. Vorteilhaft bei einer solchen Ausführungsform erweist sich, dass die Schließeinrichtung außerhalb des Strömungskanals angeordnet sein kann und insoweit die Strömungsverhältnisse nicht beeinflusst werden.

Bei einer möglichen Ausführungsform eines Volumenstromreglers kann an der Welle ein Hebelarm angeformt sein, an dem eine Feder, deren eines Ende mit dem Hebelarm und deren anderes Ende über ein Lager an dem Strömungskanal des Volumenstromreglers befestigt ist, angreifen. Durch die Feder, bei der es sich beispielsweise um eine Zugfeder handeln kann, wird die erforderliche Rückstellkraft erzeugt, gegen die die Regelklappe aufgrund des strömungsbedingten Drehmomentes aus der Offenstellung in die Schließstellung verschwenkt wird.

Das Betätigungselement kann als drehbar am Strömungskanal gelagerter und beim Verschwenken auf den Hebelarm wirkender Schwenkhebel ausgebildet sein.

Es ist aber auch durchaus möglich, dass der Hebelarm über eine Verbindungsstange mit dem zugeordneten Ende der als Blattfeder ausgebildeten Feder verbunden ist, wobei das die Blattfeder fixierende Lager verdrehbar an dem Strömungskanal befestigt ist. Wird die Regelklappe infolge des Volumenstroms gegen die Rückstellkraft in ihre Schließstellung verschwenkt, so wird die Blattfeder in Richtung der Regelklappe gebogen. Bei Absinken des anströmseitigen Staudrucks wird die Regelklappe infolge der durch die Blattfeder erzeugten Rückstellkräfte wieder in ihre Offenstellung verschwenkt.

Durch Verdrehung des Lagers kann die Einstellung des Volumenstromreglers verändert werden, bei dem die Regelklappe durch das strömende Medium in ihre Schließstellung bewegt wird. Hierzu kann beispielsweise an dem Strömungskanal ein drehbar gelagerter Schwenkhebel vorgesehen sein, der bei Betätigung den Hebelarm und insoweit die Regelklappe verschwenkt. Der Schwenkhebel kann manuell betätigbar sein.

Es ist aber auch möglich, dass zur Veränderung des Volumenstroms das Lager mittels eines Stelltriebes, insbesondere mittels eines Motors, verdrehbar ist. Dies bietet sich insbesondere beim Einsatz des Volumenstromreglers in großen klimatechnischen Anlagen an, da hierdurch beispielsweise über eine zentrale Steuereinheit der den Volumenstromregler maximal zu passierende Volumenstrom zentral eingestellt werden kann.

Bei einer anderen Ausführungsform des erfindungsgemäßen Volumenstromreglers kann ein direkt auf die Blattfeder wirkendes Betätigungselement vorgesehen sein, insbesondere ein auf der der Welle abgewandten Seite der Blattfeder angeordneter Schließhebel vorgesehen sein. Es ist aber auch durchaus möglich, dass an der Blattfeder auf der der Welle zugewandten Seite ein Zugelement, wie z. B. ein Seil, angreift, so dass die Blattfeder zum Verschwenken der Regelklappe in die Schließstellung in Richtung der Regelklappe gezogen wird.

Die durch das Biegen der Blattfeder verursachte bereichsweise Verschiebung bzw. Verlagerung wird über die vorzugsweise endseitig angeordnete Verbindungsstange an den Hebelarm weitergegeben und so die Regelklappe verschwenkt.

Bei einer anderen Ausführungsform kann ein direkt auf die Verbindungsstange wirkendes Betätigungselement vorgesehen sein, insbesondere ein auf der der Welle abgewandten Seite der Blattfeder angeformter Schließhebel vorgesehen sein, der drehbar an dem Strömungskanal, vorzugsweise an dem die Blattfeder haltenden Lager, fixiert ist, wobei der Schließhebel bei Drehung auf die Verbindungsstange wirkt und die Regelklappe in die Schließstellung verschwenkt wird.

Durch Verdrehen des Lagers wirkt der Schließhebel auf die Verbindungsstange, die wiederum aufgrund der Verbindung mit dem Hebelarm ein Verschwenken der Regelklappe bewirkt. Das Lager kann manuell oder motorisch verdreht werden.

Bei einer anderen erfindungsgemäßen Ausgestaltung eines Volumenstromreglers kann der Hebelarm über eine Verbindungsstange mit dem zugeordneten Ende der als Blattfeder ausgebildeten Feder verbunden sein und das die Blattfeder fixierende Lager kann unverdrehbar an dem Strömungskanal gelagert sein, wobei der Abstand zwischen dem die Blattfeder fixierenden Lager und der Welle der Regelklappe zum Verschließen der Regelklappe durch Betätigung der Schließeinrichtung, insbesondere durch translatorische Bewegung, reduzierbar ist.

Bei einer anderen Ausführungsform kann als Schließeinrichtung ein im Bereich der Regelklappe ortsfest angeordneter und mit der zumindest teilweise ferromagnetisch ausgebildeten und/oder mit einem ferromagnetisch ausgebildeten Element versehenen Regelklappe zusammenwirkender Elektromagnet vorgesehen sein.

Um ein ruckartiges Verschwenken der Regelklappe infolge plötzlicher und kurzzeitiger Volumenstromschwankungen zu vermeiden, kann ein auf der Abströmseite der Regelklappe ortsfest angeordneter und mit der Regelklappe verbundener Balg vorgesehen sein, der mit einer zuströmseitigen Einlassöffnung, insbesondere einem Einlassnippel, verbunden ist. Hierdurch werden die Schwenkbewegungen der Regelklappe gedämpft, da einerseits beim Schließen der Regelklappe zunächst über die Einlassöffnung das Medium in den Balg eintreten und bei erneutem Öffnen der Regelklappe dieses wieder aus dem Balg austreten muss.

Vorteilhafterweise kann der Balg mit Abstand zur Welle der Regelklappe angeordnet sein, da dann der Balg aufgrund des größeren Hebelarms geringeren Kräften ausgesetzt ist.

Der Balg kann an einem an dem Strömungskanal befestigten Halteelement fixiert sein.

Um eine Strömung entgegen der bestimmungsgemäßen Strömungsrichtung innerhalb des Volumenstromreglers zu vermeiden, sowie es beispielsweise bei Häuserfassaden mit in der Fassade befindlichen Luftauslässen, auf denen hohe Windlasten wirken, auftreten kann, kann unmittelbar im Bereich zur Regelklappe eine eine Strömung entgegen der bestimmungsgemäßen Strömungsrichtung verhindernde Sperreinrichtung vorgesehen sein. Strömt das Medium entgegen der bestimmungsgemäßen Strömungsrichtung, kann die Sperreinrichtung beispielsweise manuell in ihre Sperrposition gebracht werden und so der Strömungskanal verschlossen werden.

Zweckmäßigerweise kann die Sperreinrichtung bei Strömungen entgegen der bestimmungsgemäßen Strömungsrichtung selbsttätig schließend sein. Eine mögliche Ausbildung einer Sperreinrichtung kann eine Kugel sein, die sich bei Nichtströmen in der Ruhelage befindet und bei einer entgegen die bestimmungsgemäßen Strömungsrichtung bestehenden Strömung in ihrer Schließstellung bewegt. Als Sperreinrichtung kann auch eine um eine senkrecht zur Strömungsrichtung angeordnete Welle verschwenkbare Rückschlagklappe vorgesehen sein. Bei einer solchen Ausbildung der Sperreinrichtung bewegt sich die Sperreinrichtung bei Nichtströmen oder bei einer Strömung entgegen der bestimmungsgemäßen Strömungsrichtung z. B. aufgrund ihres Eigengewichtes direkt in die Schließstellung.

Die Sperreinrichtung kann auf der Abströmseite der Regelklappe angeordnet sein. Dies bietet sich an, wenn der Volumenstromregler Teil einer Fassadenbelüftung ist, da dann beispielsweise verhindert wird, dass bei großen Windlasten Laub oder andere Gegenstände in den Volumenstromregler gelangen können.

Im Folgenden wird ein in der Zeichnung dargestelltes Ausführungsbeispiel der Erfindung erläutert. Es zeigen:
- Fig. 1: einen Schnitt durch einen erfindungsgemäßen Volumenstromregler mit geöffneter Regelklappe,
- Fig. 2: den Gegenstand nach Fig. 1 mit geschlossener Regelklappe,
- Fig. 3: ein weiteres Ausführungsbeispiel der Erfindung mit geschlossener Regelklappe,
- Fig. 4: ein weiteres Ausführungsbeispiel der Erfindung mit geschlossener Regelklappe,
- Fig. 5: ein weiteres Ausführungsbeispiel der Erfindung mit geöffneter Regelklappe und
- Fig. 6: den Gegenstand nach Fig. 5 mit geschlossener Regelklappe.

In allen Figuren werden für gleiche bzw. gleichartige Bauteile übereinstimmende Bezugszeichen verwendet.

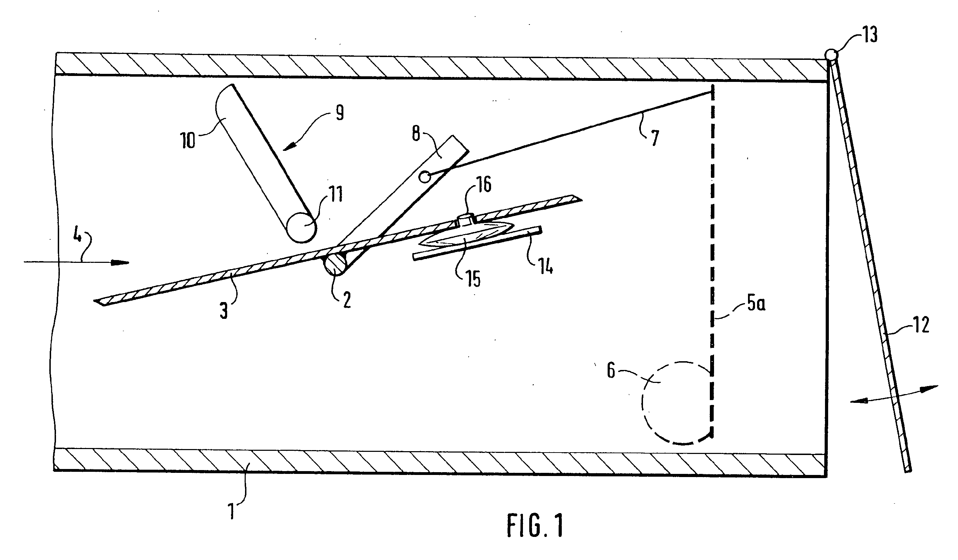

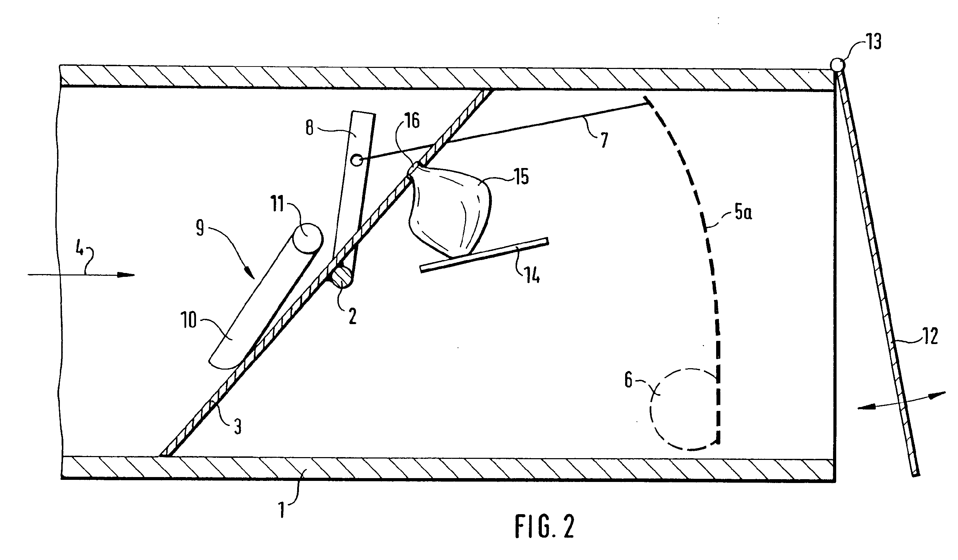

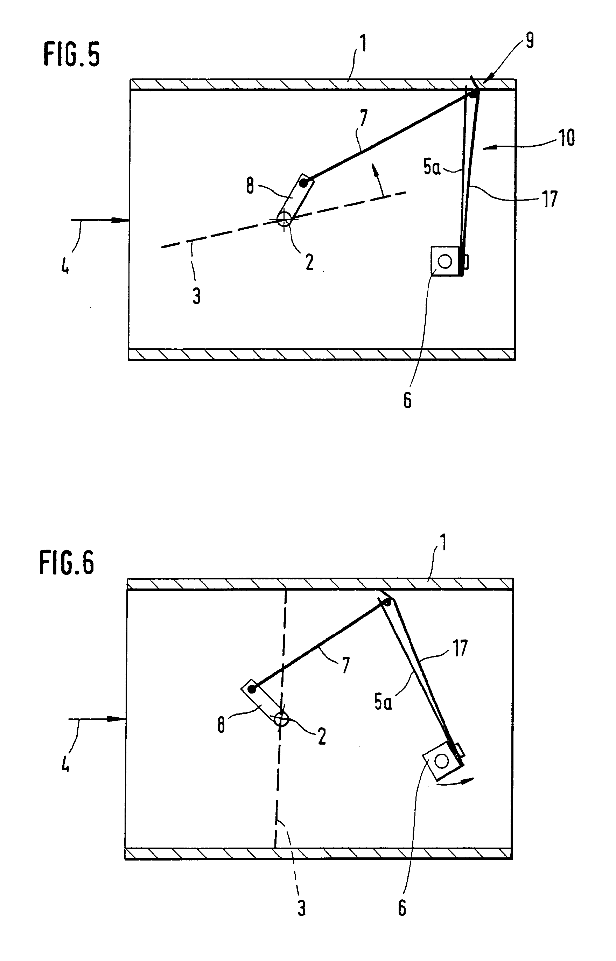

In den Figuren ist ein Strömungskanal 1 mit einer darin auf einer Welle 2 angeordneten Regelklappe 3 dargestellt. In den Figuren 1 und 5 befindet sich die Regelklappe 3 in der Offenstellung, während sie in den Figuren 2, 3, 4 und 6 in ihrer Schließstellung dargestellt ist.

Die Regelklappe 3 ist unter der Wirkung von in Strömungsrichtung 4 wirkenden Strömungskräften gegen die Rückstellkraft einer außerhalb des Strömungskanals 1 angeordneten Blattfeder 5a als Feder verschwenkbar. Die Blattfeder 5a wird am Strömungskanal 1 durch ein Lager 6 gehalten.

In der Schließstellung verschließt die Regelklappe 3 üblicherweise den Strömungskanal 1 nicht vollständig, sondern erlaubt das Strömen eines Restvolumenstroms, damit bei Absinken des anströmseitigen Staudrucks die Regelklappe 3 wieder in ihrer Offenstellung aufgrund der Rückstellkräfte verschwenkt werden kann.

Das andere Ende der Blattfeder 5a ist über eine Verbindungsstange 7 mit einem Hebel 8 verbunden, der auf der Welle 2 der Regelklappe 3 sitzt. Bei dem in den Figuren 1 und 2 dargestellten Ausführungsbeispiel kann die Verbindungsstange 7 auch als Seil ausgebildet sein, dass sie nur auf Zug beansprucht wird.

Das Lager 6 kann in dem mit der Blattfeder 5a in Verbindung stehenden Bereich als Kurvenscheibe ausgebildet sein, so dass sich beim Verdrehen des Lagers 6 im Uhrzeigersinn die Blattfeder 5a auf der Kurvenscheibe aufrollt, wobei ihr an die Verbindungsstange 7 angeschlossenes Ende ein Durchbiegung erfährt. Hierdurch ändert sich die Federkonstante, die Federvorspannung und die Kraftangriffsrichtung am Hebel 8.

Zur Veränderung des Volumenstroms, bei dem die Regelklappe 3 des Volumenstromreglers in die Schließstellung verschwenken soll, genügt es, das Lager 6 zu lösen und in eine andere Position zu verstellen. Durch Verdrehen des Lagers 6 im Uhrzeigersinn wird die Regelklappe 3 erst bei einem höheren Volumenstrom in die Schließstellung verschwenkt, da durch das Verdrehen höhere Strömungskräfte zur Überwindung der von der Blattfeder 5a erzeugten Rückstellkräfte erforderlich sind.

Um die Regelklappe 3 zu jedem beliebigen Zeitpunkt und bei jeden Strömungsverhältnissen verschließen zu können, ist eine Schließeinrichtung 9 vorgesehen. In dem in den Figuren 1 und 2 dargestellten Ausführungsbeispiel weist die Schließeinrichtung 9 einen Schwenkhebel als Betätigungselement 10 auf, der auf einer Welle 11 drehbar gelagert ist. Die Schließeinrichtung 9 wirkt direkt auf die Regelklappe 3.

Die Welle 11 und somit das Betätigungselement 10 können beispielsweise über einen nicht dargestellten außerhalb des Strömungskanals 1 angeordneten Hebel in ihrer Position verschwenkt werden. Es ist aber auch durchaus möglich, dass an der Welle 11 ein Motor wie z. B. ein Federrücklaufmotor angreift, durch den das Betätigungselement 10 verschwenkt wird.

Das Betätigungselement 10 ist in dem Bereich, in dem es mit der Regelklappe 3 in Kontakt steht, abgerundet ausgebildet, damit es beim Verschwenken hinreichend gut auf der Regelklappe 3 gleiten kann.

Auf der Abströmseite der Regelklappe 3 ist in dem in den Figuren 1 und 2 dargestellten Ausführungsbeispiel zusätzlich als Sperreinrichtung eine Rückschlagklappe 12 vorgesehen, die ein Strömen innerhalb des Strömungskanals 1 entgegen der bestimmungsgemäßen Strömungsrichtung 4 verhindert. Die Rückschlagklappe 12 ist hierzu über ein Gelenk 13 an dem Strömungskanal 1 fixiert.

Eine solche Rückschlagklappe 12 bietet sich beispielsweise insbesondere dann an, wenn der Volumenstromregler im Bereich einer Fassadenbelüftung eingesetzt wird. Es liegt auf der Hand, dass bei Einsatz des Volumenstromreglers mit einer Rückschlagklappe 12 innerhalb einer klimatechnischen Anlage das Gelenk 13 an der Innenseite des Strömungskanals 1 angeordnet ist, wobei dann der Strömungskanal 1 vorzugsweise einen viereckigen Querschnitt aufweist.

Zur Dämpfung der Regelklappe 3 infolge plötzlicher Volumenstromschwankungen innerhalb des Strömungskanals 1 ist auf der Abströmseite der Regelklappe 3 ein ortsfestes Halteelement 14 vorgesehen, auf dem ein Balg 15 angeordnet ist. Der Balg 15 weist eine Einlassöffnung 16 auf, die im Bereich der Anströmseite der Regelklappe 3 vorgesehen ist.

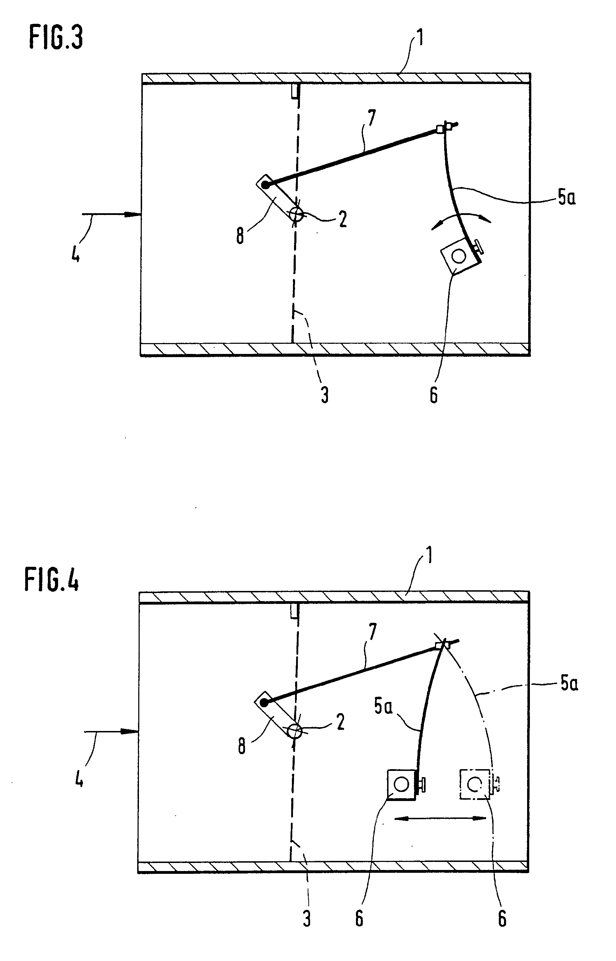

Bei dem in Fig. 3 dargestellten Volumenstromregler kann durch Verdrehen des Lagers 6 der Volumenstrom, bei dem die Regelklappe 3 in die Schließstellung verschwenkt wird, verändert werden. Dies kann manuell über eine nicht dargestellte, vorzugsweise durch einen von außerhalb des Strömungskanals 4, zugänglichen Hebel erfolgen. Es ist aber auch durchaus möglich, dass das Lager 6 durch ein nicht dargestelltes Stellglied, insbesondere durch einen Motor, verstellbar ist. Dies bietet sich insbesondere bei einer zentralen Steuerung mehrerer Volumenstromregler an.

Bei Verdrehen des Lagers 6 im Uhrzeigersinn wird der Hebelarm 8 über die Verbindungsstange 7 ebenfalls im Uhrzeigersinn bewegt, so dass die Regelklappe 3 in die Offenstellung verschwenkt wird.

In Fig. 4 ist ein Volumenstromregler dargestellt, bei dem der Abstand zwischen dem Lager 6 und der Welle 2 durch translatorische Bewegung in Richtung des unterhalb des Lagers 6 dargestellten Pfeils veränderbar ist. Als Betätigungseinrichtung 9 kann beispielsweise ein in Längserstreckung des Strömungskanals 1 wirkender Zylinder vorgesehen sein, der entweder an der Welle 2 oder dem Lager 6 angreift und ein Verschieben ermöglicht. In der mit durchgezogenen Linien dargestellten Stellung der Blattfeder 5a befindet sich die Regelklappe 3 in der Schließstellung. In der Offenstellung nimmt die Blattfeder 5a die gestrichelt dargestellte Position an.

In den Figuren 5 und 6 ist ein Volumenstromregler dargestellt, bei dem als Betätigungselement 9 ein Schließhebel 17 vorgesehen ist. Dieser Schließhebel 17 ist auf der der Welle 2 abgewandten Seite der Blattfeder 5a an dem Lager 6 fixiert.

Wird die Regelklappe 3 gegen die von der Blattfeder 5a erzeugte Rückstellkraft aufgrund der Strömungsenergie aus der in Fig. 5 dargestellten Stellung in die Schließstellung verschwenkt, biegt sich die Blattfeder 5a, wie beispielsweise in Fig. 2 dargestellt ist, in Richtung der Welle 2. Das Lager 6 wird dabei nicht verdreht, so dass insoweit der Schließhebel 10 seine in Fig. 5 dargestellte ursprüngliche Ausrichtung beibehält.

Sofern jedoch die Regelklappe 3 unabhängig von der herrschenden Strömung in ihre Schließstellung verschwenkt werden soll, wird das Lager 6 gegen den Uhrzeigersinn gedreht, so dass der Schließhebel 17 endseitig auf die Verbindungsstange 7 wirkt, die wiederum den Hebelarm 8 in eine Bewegung gegen den Uhrzeigersinn versetzt, und die Regelklappe 3 in ihrer Schließstellung verschwenkt wird.

Das Lager 6 kann bei dem in den Figuren 5 und 6 dargestellten Ausführungsbeispiel beispielsweise manuell oder aber auch motorisch verstellt werden.

## Patentansprüche

1. Volumenstromregler, insbesondere für klima- und lüftungstechnische Anlagen, mit einer in einem Strömungskanal (1) auf einer quer zur Strömungsrichtung (4) angeordneten Welle (2) schwenkbar gelagerten Regelklappe (3), die unter Einwirkung eines anströmenden Mediums gegen eine Rückstellkraft aus der Offenstellung in die Schließstellung verschwenkbar ist und bei sich verringerndem Volumenstrom wieder in die Offenstellung zurückschwenkt, **dadurch gekennzeichnet, dass** eine das Schließen der Regelklappe (3) unabhängig von der aktuell wirkenden Strömung ermöglichende und das strömungsbedingte Schließen der Regelklappe (3) nicht wesentlich beeinflussende zusätzliche Schließeinrichtung (9) zum Verschwenken der Regelklappe (3) in die Schließstellung vorgesehen ist.

2. Volumenstromregler nach Anspruch 1, **dadurch gekennzeichnet, dass** die zusätzliche Schließeinrichtung (9) ein direkt auf die Regelklappe (3) wirkendes Betätigungselement (10), insbesondere einen Schwenkhebel, umfasst.

3. Volumenstromregler nach Anspruch 1, **dadurch gekennzeichnet, dass** die zusätzliche Schließeinrichtung (9) ein indirekt auf die Regelklappe (3) wirkendes Betätigungselement (10) umfasst.

4. Volumenstromregler nach Anspruch 2 oder 3, **dadurch gekennzeichnet, dass** an der Welle (2) ein Hebelarm (8) angeformt ist, an dem eine Feder (5 bzw. 5a), deren eines Ende mit dem Hebelarm (8) und deren anderes Ende über ein Lager (6) an dem Strömungskanal (1) des Volumenstromreglers befestigt ist, angreift.

5. Volumenstromregler nach Anspruch 4 in Kombination mit Anspruch 3, **dadurch gekennzeichnet, dass** das Betätigungselement (10) als drehbar am Strömungskanal (1) gelagerter und beim Verschwenken auf den Hebelarm (8) wirkender Schwenkhebel ausgebildet ist.

6. Volumenstromregler nach Anspruch 4 oder 5, **dadurch gekennzeichnet, dass** der Hebelarm (8) über eine Verbindungsstange (7) mit dem zugeordneten Ende der als Blattfeder (5a) ausgebildeten Feder (5) verbunden ist und dass das die Blattfeder (5a) fixierende Lager (6) verdrehbar an dem Strömungskanal (1) befestigt ist.

7. Volumenstromregler nach Anspruch 6, **dadurch gekennzeichnet, dass** das Lager (6) mittels eines Stelltriebes, insbesondere mittels eines Motors, verdrehbar ist.

8. Volumenstromregler nach Anspruch 6, **dadurch gekennzeichnet, dass** ein direkt auf die Blattfeder (5a) wirkendes Betätigungselement (10) vorgesehen ist, insbesondere ein auf der der Welle (2) abgewandten Seite der Blattfeder (5a) angeordneter Schließhebel (17) als Betätigungselement (10) vorgesehen ist.

9. Volumenstromregler nach Anspruch 6, **dadurch gekennzeichnet, dass** ein direkt auf die Verbindungsstange (7) wirkendes Betätigungselement (10) vorgesehen ist, insbesondere ein auf der der Welle (2) abgewandten Seite der Blattfeder (5a) angeordneter Schließhebel (17) vorgesehen ist, der drehbar an dem Strömungskanal (1), vorzugsweise an dem die Blattfeder (5a) haltenden Lager (6), fixiert ist, wobei der Schließhebel (11) bei Drehung auf die Verbindungsstange (7) wirkt und die Regelklappe (3) in die Schließstellung verschwenkt wird.

10. Volumenstromregler nach Anspruch 4, **dadurch gekennzeichnet, dass** der Hebelarm (8) über eine Verbindungsstange (7) mit dem zugeordneten Ende der als Blattfeder (5a) ausgebildeten Feder (5) verbunden ist und dass das die Blattfeder (5a) fixierende Lager (6) unverdrehbar an dem Strömungskanal (1) gelagert ist, wobei der Abstand zwischen dem die Blattfeder (5a) fixierenden Lager (6) und der Welle (2) der Regelklappe (3) zum Verschließen der Regelklappe (3) durch Betätigung mittels der Schließeinrichtung (9), insbesondere durch translatorische Bewegung, reduzierbar ist.

11. Volumenstromregler nach Anspruch 1, **dadurch gekennzeichnet, dass** als Schließeinrichtung (9) ein im Bereich der Regelklappe (3) ortsfest angeordneter und mit der zumindest teilweise ferromagnetisch ausgebildeten und/oder mit einem ferromagnetisch ausgebildeten Element versehenen Regelklappe (3) zusammenwirkender Elektromagnet vorgesehen ist.

12. Volumenstromregler nach einem der Ansprüche 1 bis 11, **dadurch gekennzeichnet, dass** ein auf der Abströmseite der Regelklappe (3) ortsfest angeordneter und mit der Regelklappe (3) verbundener Balg (15) vorgesehen ist, der mit einer zuströmseitigen Einlassöffnung (16), insbesondere einem Einlassnippel, verbunden ist.

13. Volumenstromregler nach Anspruch 12, **dadurch gekennzeichnet, dass** der Balg (15) mit Abstand zur Welle (2) der Regelklappe (3) angeordnet ist.

14. Volumenstromregler nach Anspruch 12 oder 13, **dadurch gekennzeichnet, dass** der Balg (15) an einem an dem Strömungskanal (1) befestigten Halteelement (14) fixiert ist.

15. Volumenstromregler nach einem der Ansprüche 1 bis 14, **dadurch gekennzeichnet, dass** unmittelbar im Bereich zur Regelklappe (3) eine eine Strömung entgegen der bestimmungsgemäßen Strömungsrichtung (4) verhindernde Sperreinrichtung vorgesehen ist.

16. Volumenstromregler nach Anspruch 15, **dadurch gekennzeichnet, dass** die Sperreinrichtung selbsttätig schließend ist.

17. Volumenstromregler nach Anspruch 15 oder 16, **dadurch gekennzeichnet, dass** als Sperreinrichtung eine um eine senkrecht zur Strömungsrichtung angeordnete Welle (11) verschwenkbare Rückschlagklappe (12) vorgesehen ist.

18. Volumenstromregler nach einem der Ansprüche 15 bis 17, **dadurch gekennzeichnet, dass** die Sperreinrichtung auf der Abströmseite der Regelklappe (3) angeordnet ist.
